# EUROPÄISCHE PATENTSCHRIFT

(11) **EP 0 660 802 B1**
(45) Veröffentlichungstag und Bekanntmachung des Hinweises auf die Patenterteilung: **22.01.1997**
(21) Anmeldenummer: 93919253.0
(22) Anmeldetag: 03.09.1993
(51) Int. Cl.: C01B 31/02

(54) **VERFAHREN ZUR TRENNUNG VON FULLERENEN**
PROCESS FOR SEPARATING FULLERENES
PROCEDE DE SEPARATION DE FULLERENES

(30) Priorität: 16.09.1992 DE 4230915
(43) Veröffentlichungstag der Anmeldung: 05.07.1995
(73) Patentinhaber: HOECHST AKTIENGESELLSCHAFT, 65929 Frankfurt am Main (DE)
(72) Erfinder: MÜLLER, Wolfgang, D-65207 Wiesbaden (DE); BRÖLL, Richard, D-63225 Langen (DE); WEBER, Eckhard, D-65835 Liederbach (DE); DAIMER, Johann, D-64546 Mörfelden-Walldorf (DE); MÜLLER, Roland, D-53175 Bonn (DE)
(86) Internationale Anmeldenummer: EP9302378
(87) Internationale Veröffentlichungsnummer: WO9406715

(56) Entgegenhaltungen:
- WO-A-93/01128
- JOURNAL OF THE CHEMICAL SOCIETY, CHEMICAL COMMUNICATIONS Nr. 1 , 1. Januar 1992 , LETCHWORTH GB Seiten 60 - 61 A.M. VASSALLO ET AL. in der Anmeldung erwähnt
- ENERGY AND FUELS Bd. 6, Nr. 2 , 1992 , WASHINGTON,DC,US Seiten 176 - 179 L.S.K. PANK ET AL.
- JOURNAL OF ORGANIC CHEMISTRY Bd. 57, Nr. 6 , 13. März 1992 , EASTON US Seiten 1924 - 1926 M.S. MEIER ET AL. in der Anmeldung erwähnt
- MENDELEEV COMMUNICATIONS Nr. 1 , 1993 , UNKNOWN Seite 9 I.N. KREMENSKAYA ET AL.

## Beschreibung

Ausgehend von Fulleren-Ruß, beispielsweise aus Lichtbogenanlagen, können die Fullerene C₆₀/C₇₀ und Spuren höherer Fullerene extraktiv vorzugsweise mit Toluol isoliert werden (R. Haufler J. Phys. Chem. 94, 8634 (1990)). Zur Fulleren-Auftrennung wird dann im präparativen Maßstab vor allem die Flüssigchromatographie (LC) herangezogen. Als stationäre Phase werden dabei Kieselgel, modifizierte Kieselgele, wie Pirkle-Phase oder Reversed-Phase-Kieselgele, Aluminiumoxid oder auch Graphitsäulen eingesetzt (A. Vassallo et. al. J. Chem. Soc. Chem. Commun. 1992, 60). Eine befriedigende Auftrennung kann an diesen Säulen allerdings nur mit Lösungsmittelgemischen erreicht werden. So wird beispielsweise die Aluminiumoxid- als auch die Graphitsäule mit einer Mischung aus Hexan (ca. 90 %) und Toluol (ca. 10 %) betrieben, eine Reversed-Phase-Silica Säule muß dagegen mit Toluol/Alkohol oder Toluol/Acetonitril eluiert werden.

Für einen wirtschaftlichen Gesamtprozess zur Gewinnung von reinem C₆₀ oder C₇₀ wäre es vorteilhaft, wenn Extraktion und chromatographische Trennung mit dem gleichen Lösungsmittel durchgeführt werden könnte. Vorzugsweise sollte dies mit einem Lösungsmittel geschehen, in dem Fullerene gut löslich sind, z.B. Toluol.

Die Verwendung von Elutionsmedien mit niedrigem Toluolgehalt (z.B. Toluol:Hexan = 10:90) sind häufig problematisch, da die Extrakte auf der Säule kurz nach dem Auftragen möglicherweise auskristallisieren und im Verlauf der Chromatographie kaum wieder in Lösung gebracht werden können, da die Löslichkeit von Fullerenen in Toluolgemischen, wie beispielsweise Hexan:Toluol = 9:1, deutlich niedriger ist als in reinem Toluol. Es kann deshalb nur eine relativ geringe Menge Fulleren auf die Säule aufgetragen werden.

Die Verwendung von reinem Toluol als Elutionsmedium würde die Beladung der Trennsäule mit Rohfulleren signifikant erhöhen. Ein Auskristallisieren auf der Säule könnte somit wirkungsvoll verhindert werden. Zusätzlich ließe sich die Beladung der Trennsäule weiter steigern, wenn es gelänge die Chromatographie mit Toluol als Elutionsmittel bei erhöhter Temperatur durchzuführen.

M. Meier (JOC 1992, 57, 1924) gelang die C₆₀/C₇₀-Trennung mit dem System: Ultrastyragel (Gelpermeationsmaterial)/100 % Toluol. Dieses Verfahren benötigt jedoch ein sehr teures Säulenmaterial welches normalerweise nur für analytische Zwecke eingesetzt wird. Ferner weist das Elutionsdiagramm keine Grundlinientrennung auf.

Es wurde nun überraschend gefunden, daß bei Verwendung von Koks, Anthrazit und/oder Graphit als Trägermaterial die chromatographische Auftrennung von Fulleren mit unpolaren Lösungsmitteln als Elutionsmedium, in dem Fulleren gut löslich ist, durchgeführt werden kann.

Die Erfindung betrifft somit ein Verfahren zur chromatographischen Auftrennung von Fullerenen mit einem unpolaren aromatischen Lösungsmittel als Elutionsmittel, das dadurch gekennzeichnet ist, daß als Trägermaterial Koks, Anthrazit und/oder Graphit eingesetzt wird und das unpolare aromatische Lösungsmittel den Hauptbestandteil des Elutionsmittels darstellt.

Mit dem Verfahren können insbesondere C₆₀- von C₇₀-Fullerenen bzw. C₆₀ und/oder C₇₀ von anderen, bevorzugt höheren Fullerenfraktionen abgetrennt werden. Das aufzutrennende Fullerenmaterial wird durch Herstellung von Fullerenruß im Lichtbogenverfahren gewonnen mit anschließender Extraktion mit einem unpolaren organischen Lösungsmittel (Rohfulleren), wie z.B. in WO 92/04279 beschrieben. Das Rohfulleren kann vorteilhaft mittels Dekanter kontinuierlich oder in batch-Verfahren abgetrennt werden.

Das Trägermaterial Koks, Anthrazit und Graphit eignet sich aufgrund seiner Gefügestruktur, Kristallmodifikation und Porosität in besonderer Weise zur beschriebenen Auftrennung von Fullerenen.

In diesem Sinne sind folgende Kohlenstoffmaterialien dazu geeignet:
I) Kokse auf Basis Petrolpeche und Kohlepeche;
II) Kokse, die über Mesophase hergestellt werden;
III) Kokse auf Basis Ruß;
IV) Anthrazit;
V) Graphite auf Basis von I)-III);
VI) Gemische aus obigen Klassifikationen.

Der Aschegehalt der Trägermaterialien sollte wegen möglicher Wechselwirkungen begrenzt sein, beispielsweise auf < 1-0,1 %, wobei auch höhere Werte noch tolerabel sein können. Welche Werte tolerabel sind kann in einfachen Versuchen ohne erfinderischen Aufwand festgestellt werden.

Die Kohlenstoffmaterialien müssen in gemahlener Form eingebracht werden, wobei die Mahlung nicht zu grob (fehlende Trennschärfe) und nicht zu fein (zu großer Strömungswiderstand) sein sollte. Beispielsweise eignet sich bevorzugt eine Körnung mit mittlerer Korngröße (50 % ≤ ...) von ca. 1040 µm bei einer Schüttdichte von ca. 0,4-0,6 g/cm³ und einer Stampfdichte von 0,8-1,1 g/cm³.

Als Lösungsmittel werden aromatische Lösungsmittel, bevorzugt aromatische Kohlenwasserstoffe verwendet. Besonders bevorzugt werden Benzol, Toluol, Xylole, Mesitylen (C₂-C₄)-Alkylbenzole, Tetralin, Naphthalin, 1- und/oder 2-Methylnaphthalin, (C₂-C₄)-Alkyl-Naphthalin, Anisol, Phenetol, Nerolin, Ethoxynaphthalin sowie Fluor-, Chlor-, Dichlor-, Trichlor- und Brombenzol eingesetzt. Besonders bevorzugt werden Toluol und/oder Benzol verwendet.

Die genannten Lösungsmittel können auch mit nicht-aromatischen Lösungsmitteln versetzt werden, wobei der Gehalt an aromatischem Lösungsmittel immer Hauptbestandteil sein muß.

Rohfullerenextrakte können einerseits in Form von gesättigten Lösungen (z.B. bei 22°C ca. 3-4 g/l C₆₀ und 0,8-1,5 g/l C₇₀) aufgegeben werden. Andererseits kann mit Diethylether gewaschenes Rohfullerenpulver direkt auf die Säule gebracht werden. Diese Variante wird immer dann angewendet, wenn Trennungen bei hoher Temperatur und maximaler Beladung der Säule durchgeführt werden sollen.

Die Chromatographie kann im Nieder-, Mittel- oder Hochdruckbereich durchgeführt werden, vorzugsweise in einem Temperaturbereich von 20-80°C. Bevorzugt wird das Verfahren im Niederdruckbereich bis maximal ca. 2 bar durchgeführt.

Mit dem erfindungsgemäßen Verfahren können Fullerene zersetzungsfrei aufgetrennt werden. Die auf die Säule aufgetragenen Fullerene werden zu 98 % in den Trennfraktionen wiedergefunden.

### Beispiel 1

800 g SIGRI Graphit HR 70 (bestehend aus 2/3 Anthrazit und 1/3 Petrolgraphit der mittleren Korngröße 38 µm der Schüttdichte 0,52 g/cm³ und der Hauptdichte 0,89 g/cm³) werden in Toluol aufgeschlämmt und nach dem Eingießen in die Säule mit 0,5 bar verdichtet. Es werden 250 ml Rohfulleren-Lösung auf die Säule gegeben. Die Lösung enthält 775 mg C₆₀, 325 mg C₇₀ und ~14 mg höhere Fullerene bzw. Fullerenoxide.

Anschließend wird mit Toluol bei 0,5-0,1 bar eluiert, wobei der Fraktionswechsel nach jeweils 1000 ml erfolgt.

C₆₀ (100 % Reinheit) konnte in einer Gesamtausbeute von 97 % in den ersten beiden Fraktionen abgetrennt werden.
Die nachfolgende Mischfraktion enthält C₆₀/C₇₀ im Verhältnis 25:75.
Alle weiteren Fraktionen enthalten C₇₀ in Reinheiten 94-98 %. Die Elution von C₇₀ kann durch eine Säulenheizung zusätzlich beschleunigt werden.

### Beispiel 2

Gute Ergebnisse liefern ferner ein calcinierter Petrolkoks. Die Mahlung hat ein mittleres Korn von 25 µm bei einem Siebdurchgang von 10 % < 3 µm und 90 % < 80 µm und einer Schüttdichte von 0,54 g/cm³. Das Säulenmaterial wird wie in Beispiel 1 beschrieben eingesetzt.

### Beispiel 3

Ein graphitierter Steinkohlenteerpech-Koks wird gemahlen auf ein mittleres Korn von 20 µm bei einem Siebdurchgang 10 % < 3 µm und 90 % < 70 µm und einer Schüttdichte von 0,48 g/cm³. Das Säulenmaterial wird wie in Beispiel 1 beschrieben eingesetzt.

### Beispiel 4

Auf eine 35 l Säule (HR 70/Toluol) werden 4 1 Rohfullerenlösung (C₆₀ 2,7 g/l, C₇₀ 0,8 g/l) aufgegeben und innerhalb 65 h mit 150 l Toluol eluiert. Die C₆₀ Fraktion (mit C₆₀ > 99 %) war in insgesamt 26 1 enthalten, 10 l resultierten als niedrigkonzentrierte Mischfraktion, während C₇₀ (mit C₇₀ 94 %) in den restlichen 114 l enthalten war.

### Beispiel 5

Auf eine 35 l Säule (siehe Beispiel 4) werden 10 l Rohfullerenlösung (C₆₀ 26,3 g und C₇₀ 13,8 g) aufgetragen. Insgesamt wird mit 180 l Toluol in 81 h eluiert. Der Flow betrug 1-4 l/h.
Ausbeute: C₆₀: 62 % C₇₀: 40 %

### Beispiel 6

In 500 ml-Säulen werden die beschriebenen Füllmaterialien als Toluol-Aufschlämmung eingegossen und mit 0,5 bar Überdruck verdichtet. Nach Aufgabe der Rohfulleren-Lösung wird mit Toluol 100 % bei 0,05-0,1 bar chromatographiert. Die Ergebnisse sind in der nachfolgenden Tabelle wiedergegeben.

**Tabelle**

| | aufgetragene Mischung | | getrennte Fraktionen | | | |
|---|---|---|---|---|---|---|
| | C₆₀ mg + | C₇₀ mg | C₆₀ mg | % | C₇₀ mg | % |
| Koks-Petrol | 233 | 63 | 226 | 97 | 36 | 57 |
| Koks-Pech | 233 | 63 | 185 | 79 | 1,4 | 2,2 |
| Graphit-Petrol | 216 | 53 | 145 | 67 | -- | -- |
| Graphit-Ruß | 216 | 53 | 201 | 93 | 3,2 | 6 |
| Graphit-Pech | 216 | 53 | 187 | 87 | 30 | 57 |

Die Konzentration der C₆₀ Fraktion liegt beispielsweise im Bereich 2,3 bis 3 g/l Diese hohen Konzentrationen im Eluat können mit keiner alternativen chromatographischen Methode erreicht werden.

## Patentansprüche

1. Verfahren zur chromatographischen Auftrennung von Fullerenen mit einem unpolaren aromatischen Lösungsmittel als Elutionsmittel, dadurch gekennzeichnet, daß als Trägermaterial Koks, Anthrazit und/oder Graphit, ausgenommen Naturgraphit, eingesetzt wird und das unpolare aromatische Lösungsmittel den Hauptbestandteil des Elutionsmittels darstellt.

2. Verfahren nach Anspruch 1, dadurch gekennzeichnet, daß als Lösungsmittel Toluol und/oder Benzol eingesetzt wird.

3. Verfahren nach Anspruch 1 oder 2, dadurch gekennzeichnet, daß die chromatographische Auftrennung in einem Temperaturbereich von 20 bis 80°C durchgeführt wird.

## Claims

1. A process for the chromatographic separation of fullerenes using a nonpolar aromatic solvent as eluant, wherein the support material used is coke, anthracite and/or graphite, excluding natural graphite, and the nonpolar aromatic solvent is the main constituent of the eluant.

2. The process as claimed in claim 1, wherein the solvent used is toluene and/or benzene.

3. The process as claimed in claim 1 or 2, wherein the chromatographic separation is carried out in a temperature range from 20 to 80°C.

## Revendications

1. Procédé pour la séparation chromatographique des fullérènes à l'aide d'un solvant aromatique non polaire en tant qu'éluant, caractérisé en ce qu'on utilise comme matière support le coke, l'anthracrite et/ou le graphite, à l'exception du graphite naturel, et que le solvant aromatique non polaire représente le constituant principal de l'éluat.

2. Procédé selon la revendication 1 caractérisé en ce qu'on utilise en tant que solvant le toluène et/ou le benzène.

3. Procédé selon la revendication 1 ou 2 caractérisé en ce que la séparation chromatographique est mise en oeuvre dans un intervalle de températures de 20 à 80°C.
